(19) **Europäisches Patentamt**

**European Patent Office**

**Office européen des brevets**

(11) Veröffentlichungsnummer : **0 472 758 B1**

(12) **EUROPÄISCHE PATENTSCHRIFT**

(45) Veröffentlichungstag der Patentschrift :
**13.12.95 Patentblatt 95/50**

(51) Int. Cl.$^6$ : **H04B 7/005**

(21) Anmeldenummer : **90116545.6**

(22) Anmeldetag : **29.08.90**

(54) **Verfahren zur Übertragung digitaler Daten über einen zeitvarianten Kanal**

(43) Veröffentlichungstag der Anmeldung :
**04.03.92 Patentblatt 92/10**

(45) Bekanntmachung des Hinweises auf die
Patenterteilung :
**13.12.95 Patentblatt 95/50**

(84) Benannte Vertragsstaaten :
**CH DE FR GB LI SE**

(56) Entgegenhaltungen :
**WO-A-86/06568**
**US-A- 2 705 795**
**US-A- 2 982 852**
**Proceedings of the 39th IEEE Vehicular Tech-**
**nology Conference, Mei, 1989; IEEE, New**
**York, US, 1989; Sampei und Sunaga:**
**"Rayleigh fading compensation method for**
**16QAM in digital land movile radio channels",**
**Seiten 640 - 646**

(73) Patentinhaber : **ASCOM TECH AG**
**Berner Technopark,**
**Morgenstrasse 129**
**CH-3018 Bern (CH)**

(72) Erfinder : **Wittneben, Armin, Dr.**
**Jurastrasse 17b**
**CH-5406 Baden/Rütihof (CH)**

(74) Vertreter : **Keller, René, Dr. et al**
**Keller & Partner**
**Patentanwälte AG**
**Marktgasse 31**
**Postfach**
**CH-3000 Bern 7 (CH)**

EP 0 472 758 B1

## Beschreibung

## Technisches Gebiet

Die Erfindung betrifft ein Verfahren zur Uebertragung von digitalen Daten über einen zeitvarianten und mit additivem Rauschen behafteten Kanal, wobei in einem Sender die zu übertragenden digitalen Daten in Form von Symbolen mit einer Symboldauer T auftreten. Weiter bezieht sich die Erfindung auf einen Empfänger zur Durchführung des Verfahrens.

## Stand der Technik

Es gibt eine grosse Zahl von Verfahren zur Uebertragung von digitalen Daten. Sie sind in ihren Eigenheiten jeweils geprägt von den Gegebenheiten (z. B. Art der vorhandenen Kanalstörungen, geringe Signalleistungen etc.) und gewünschten Randbedingungen (z. B. Bandbreiteneffizienz, kleine Fehlerwahrscheinlichkeit etc.). Da die Verfahren stets unter Berücksichtigung der Umstände entworfen werden müssen, ist es in der Regel nicht ohne weiteres möglich, einzelne Massnahmen, die z. B. bei einem FM-System (Frequenz-Modulation) getroffen werden, auf ein andersartiges System (z. B. auf PAM = Puls-Amplituden-Modulation) zu übertragen. Vielmehr müssen für jeden Fall Kanaleigenschaften, Modulationsverfahren und Empfängerstruktur im Hinblick auf die gewünschten Zieleigenschaften (z.B. Bandbreiteneffizienz, geringe Fehlerrate, Störanfälligkeit u.dgl.) analysiert und überprüft werden. Erst aufgrund der Resultate solcher (meist theoretischer) Untersuchungen ist es möglich, über den Sinn und Erfolg von bestimmten Massnahmen zu entscheiden.

Die vorliegende Erfindung betrifft nun die Datenübertragung über Mobilfunkkanäle. In diesen taucht häufig das Problem des zeitselektiven Fadings (zeitabhängiger Schwund) auf. Solche Störungen treten insbesondere dann auf, wenn die durch Mehrwegausbreitung bedingten Verzögerungen (multipath delay spread) klein sind im Vergleich zur Symboldauer T. Dies kann z.B. zu Amplitudenverzerrungen führen, die sich von Symbol zu Symbol ändern.

Der zeitselektive Kanal ist also ein Kanal, der mit starken multiplikativen Störungen und mit additivem (in der Regel Gauss'schem) Rauschen behaftet ist. Er stellt einen Spezialfall des zeitvarianten Kanals dar. Eine andere Form von Störungen, die ebenfalls zu dieser allgemeinen Kategorie gehört, ist die frequenzselektive Störung. Sie ist in einem gewissen Sinn das Duale zur Zeitselektivität.

Vom Prinzip her ist es bekannt, die Fehlerwahrscheinlickkeit bei zeitselektiven Kanälen durch Mehrfachübertragung (time diversity) resp. entsprechende Codierung der Daten (z.B. TCM = Trellis Coded Modulation) zu reduzieren. Die Nachteile der bekannten Verfahren liegen vielfach in der hohen Komplexität des Empfängers (die z.B. bei TCM exponentiell mit der Gedächtnislänge des Coderspeichers wächst) und in der erhöhten Empfindlichkeit gegenüber Phasenjitter (welche durch das erhöhte Signalalphabet bedingt ist).

Aus dem Artikel "On the Potential Advantage of a Smearing-Desmearing Filter Technique in Overcoming Impulse-Noise Problems in Data Systems", R.A. Wainwright, IRE Trans. on Comm. Syst., Vol. CS-9, Dec 1961, pp. 362-366, ist ein Datenübertragungssystem bekannt, bei welchem Pulse in ein Smearing-Filter gegeben und dann über eine Telefonleitung übertragen werden. Die Telefonleitung ist dabei mit additiven, stossanrtigen Störungen behaftet. Das Desmearing-Filter, welches die "zeitverschmierten" Pulse des Senders wieder regeneriert, führt gleichzeitig die Störpulse in ein zeitlich ausgedehntes Rauschen über.

Die aus diesem Artikel bekannten Untersuchungen beschränken sich auf zeitinvariante Kanäle. Die Anwendung eines solchen Verfahrens auf z.B. zeitselektive Kanäle führt zu einer denkbar schlechten Uebertragung.

Aus der deutschen Patentanmeldung DE-37 30 399 ist ein Verfahren zur Uebertragung eines Digitalsignals mittels Frequenz- resp Phasenmodulation bekannt. Der wesentliche Punkt besteht dabei darin, dass das digitale Basisbandsignal von einem Impulsdehnungsfilter, auch Smearing-Filter genannt, in ein quasi-analoges, näherungsweise Gauss'sches Signal übergeführt wird, welches dann mittels eines frequenzmodulierten Trägers übertragen wird. Im Empfänger wird das "Quasi-Gauss'sche" Signal mit einem Impulsdehnungsfilter, auch Desmearing-Filter genannt, wieder in das Basisbandsignal zurückgeführt. Wegen der hervorragenden nichtkohärenten Demodulierbarkeit und der Impulsverschmierung soll sich das dort genannte Verfahren besonders gut für die Uebertragung über Fading-Kanäle (z.B. bei Mobilfunk) eignen.

Ein Nachteil, der allen FM-Systemen gemeinsam ist, ist die gegenüber der linearen Modulation geringere Bandbreiteneffizienz. Dies ist aber insbesondere bei Mobilfunksystemen ein zentrales Kriterium. Angesichts der Tatsache, dass heutzutage ausreichend leistungsfähige und lineare Verstärker (für die digitale PAM) zur Verfügung stehen, haben deshalb die FM-Verfahren zusätzlich etwas von ihrer schaltungstechnisch bedingten Attraktivität eingebüsst.

Aus der WO 86/06568 ist ein Datenübertragungssystem für ein Uebertragungsmedium mit "fast fades" einer Dauer grösser als die Symboldauer bekannt. Mit einem Chirp Filter werden die Datensymbole vor der Uebertragung zeitlich gespreizt. Die Symbolenergie eines einzelnen Symbols wird auf diese Weise über ein Intervall gespreizt, das grösser als die erwartete Länge eines einzelnen fadings ist. Im Empfänger wird der Chirp Effekt mit einem Filter rückgängig gemacht, dessen Transferfunktion komplex konjugiert zu derjenigen des senderseitigen Chirp Filters ist.

**Darstellung der Erfindung**

Aufgabe der Erfindung ist es, ein Verfahren der eingangs genannten Art anzugeben, das eine zuverlässige Datenübertragung über Fading-Kanäle bei gleichzeitig geringer Empfängerkomplexität erlaubt. Insbesondere sollte sich das Verfahren auch durch eine gute Energie- und Bandbreiteneffizienz auszeichnen.

Die erfindungsgemässe Lösung ist im Anspruch 1 charakterisiert. Ein erfindungsgemässer Empfänger zur Durchführung der Kanalschätzung des Verfahrens ist in Anspruch 10 definiert.

Der Kern der Erfindung liegt in der Erkenntnis, dass das zeitselektive Fading des Kanals die freie Euklidische Distanz (welche bei gegebenem Rauschabstand ein Mass für die Fehlerwahrscheinlichkeit darstellt) in einem digitalen PAM-System (d.h. in einem lineare Modulationsverfahren) mit Smearing-Filterung nicht ändert, wenn der Dehnungsfaktor $k_0$ hinreichend gross ist. Mit anderen Worten: Das Fading hat überraschenderweise keinen Einfluss auf die asymptotische (d.h. $E_s/N_0 \rightarrow \infty$; $E_s$ = Symbolenergie, $N_0$ = Varianz des Rauschens) Fehlerwahrscheinlichkeit des optimalen Empfängers. Somit ist das erfindungsgemässe PAM-Verfahren asymptotisch immun gegen zeit- und auch frequenzselektives Fading.

Es ist nun möglich, mittels digitaler PAM Daten in bandbreiteneffizienter Weise zu übertragen, ohne auf die Trelliscodierung (welche ebenfalls eine Art Zeitdiversity realisiert) angewiesen zu sein. Die Erfindung kann aber durchaus in Verbindung mit einer solchen Codierung eingesetzt werden, so dass ein System entsteht, dessen Verhalten einem solchen mit alleiniger Tressiscodierung deutlich überlegen ist.

Es ist dabei zu beachten, dass ein kontinuierlicher Tradeoff zwischen Komplexität und Fehlerrate vorliegt. Für die Praxis ist das insofern ein Vorteil, als die Komplexität z.B. langsam reduziert werden kann, ohne dass irgendwann mit einem sprunghaften Anstieg der Fehlerwahrscheinlichkeit gerechnet werden muss.

Gemäss der Erfindung ist die Symboldauer T sehr viel kleiner als der Dehnungsfaktor $k_0$, so dass sich in einem ausgewählten Intervall der Länge T die zeitlich gegeneinander verschobenen und gewichteten Stossantworten von sehr vielen (z.B. 100) Symbolen überlagern. Eine grundlegende Erkenntnis für die Erfindung liegt nun darin, dass durch das Fading und die Filterung nach dem MSE-Prinzip (d.h. minimale mittlere Fehlerquadrate; MSE = Mean Square Error) eine unerwünschte Intersymbol-Interferenz, kurz ISI genannt, entsteht. Im Empfänger sind die zu verschiedenen Symbolen gehörenden Basisbandpulse nämlich nicht mehr einfach zeitlich verschobene Versionen desselben Pulses. Die Verwendung von Smearing-Filtern in linearen Modulationsverfahren kann also nur dann zum Ziel führen, wenn festgestellt werden kann, dass die erwähnte ISI auflösbar ist. Dass dies der Fall ist und wie das zu geschehen hat, das ist eine wesentliche Erkenntnis der vorliegenden Erfindung.

Ein Problem, das bei PAM in Fading-Kanälen auftritt, besteht darin, dass die Amplitude, welche die Information überträgt, von Zeit zu Zeit extrem stark gestört wird. Es ist deshalb nicht von vornherein klar, ob und wie Signal und Störung im Empfänger wieder zu trennen sind. Eine reine Kompensation des Fadings (d.h. eine Anhebung der Signalamplitude auf einen vorgegebenen Wert) hebt nämlich bei starkem Schwund das Rauschen so stark an, dass der Effekt der Zeitdiversity zunichte gemacht wird. Diese Problematik wird bei FM-Uebertragung insgesamt vermieden, da das Signal ja eine konstante Hüllkurve hat und die Information allein in der Phasenlage (resp. Momentanfrequenz) liegt. Das mit Schwund behaftete Signal kann bekanntlich mit einfachen Mitteln wieder auf konstante Amplitude gebracht und dann demoduliert werden.

Um irgendwelchen Verwechslungen und Missverständnissen vorzubeugen, soll folgendes festgehalten werden:

1. Der Begriff "lineare Frequenzmodulation" beinhaltet im wesentlichen Datenübertragungsverfahren mittels eines HF-Trägers, dessen Frequenz entsprechend dem zu übertragenden Symbol innerhalb des vorgegebenen Zeitintervalls linear zu- oder abnimmt (chirped RF). Selbstverständlich ist aber auch dieses sog. "lineare FM-Verfahren" ein nichtlineares Modulationsverfahren wie jedes andere FM-Verfahren auch.

2. Spreizbandverfahren (spread spectrum) der erwähnten Art (d.h. lineare FM) wurden u.a. auch dazu benützt, frequenzselektives Fading zu bekämpfen.

3. Die allen Spreizbandverfahren zugrunde liegende Idee ist darin zu sehen, dass die in einem Symbol enthaltene Information über einen Frequenzbereich verschmiert wird, der beträchtlich grösser als die Symbolfrequenz ist. Damit ist das Fading einzelner Frequenzen über das Ganze gesehen nicht mehr kritisch.

4. Auf den ersten Blick mag es deshalb scheinen, dass "lineare FM" angewandt auf frequenzselektives Fading dual ist zur Datenübertragung mittels Smearing (im folgenden kurz SDT - Smeared Data Transmission - genannt) angewandt auf zeitselektives Fading. Dem ist aber nicht so, weil in "linearer FM" benachbarte Symbole einerseits auf der Zeitachse nicht überlappen und andererseits ein gemeinsames Frequenzband benützen. Das zur "linearen FM" zeitduale System wäre nämlich eines, bei welchem nichtüberlappende Frequenzbänder in einem gemeinsamen Zeitintervall verwendet würden. Demgegenüber verwendet die Datenübertragung mittels Smearing ein gemeinsames Frequenzband sowie zeitlich überlappende Symbole, wodurch die Bandbreiteneffizienz gewährleistet ist.

5. Es ist nun klar, dass ein zur "linearen FM" duales System ein SDT-System mit nicht überlappenden Smearing-Pulsen wäre. In einem solchen Fall dürfte die Datenrate nicht grösser als die inverse Pulsdauer sein.

6. Aus all dem ergibt sich, dass "lineare FM" die grundlegende Schwierigkeit der SDT (nämlich die schwundinduzierte ISI des im Empfänger durch Pulskompression [Desmearing] zurückgewonnenen Basisbandsignals) durch eine drastische Reduktion der Bandbreiteneffizienz umgeht.

Soviel zur Erfindung im allgemeinen. Im folgenden wird auf bevorzugte Ausführungsformen derselben eingegangen.

Zur Uebertragung der digitalen Daten über einen zeitselektiven, d.h. einen mit multiplikativen Störungen behafteten Kanal ist das zeitvariante Transversalfilter aufgeteilt in einen von der Kanalschätzung abhängigen Fading-Equalizer und ein nachfolgendes, zeitinvariantes inverses Pulsdehnungsfilter. Für die rein zeitselektiven Störungen vereinfacht sich also das Transversalfilter im Empfänger.

Gemäss einer vorteilhaften Ausführungsform wird im Empfänger im Fading-Equalizer das Uebertragungssignal zwecks Kompensation der Kanalstörungen mit einem Verstärkungsfaktor

$$y_\mu = \frac{x_\mu{}^*}{x_\mu{}^* x_\mu + \beta^{(0)} N_0/E_s},$$

multipliziert ($x_\mu$ = geschätzter Fadingkoeffizient; $N_0$ = spektrale Leistungsdichte des Rauschens; $E_s$ = mittlere Symbolenergie; $\beta^{(0)}$ = Korrekturfaktor. Der hochgestellte Stern bedeutet "konjugiert komplex".) Der Verstärkungsfaktor führt eine rauschabhängige Kompensation des Fadings durch. Er bewegt sich zwischen dem Extremfall der reinen Fadingegalisation, d.h. $y_\mu = 1/x_\mu$, und dem Fall des Matched-Filter-Empfängers, d.h. $y_\mu = x_\mu{}^*$. Die reine Fadingegalisation findet nämlich dort ihre Grenzen, wo das additive Kanalrauschen allzu stark angehoben würde. Der Matched-Filter-Empfänger nimmt andererseits zuwenig Rücksicht auf die durch das Fading induzierte ISI. Durch die erfindungsgemässe Verstärkung wird also ein Ausgleich zwischen den gegenläufigen Erfordernissen geschaffen.

Damit die Komplexität des Empfängers gering gehalten werden kann, werden die digitalen Daten mit einem für einen AWGN-Kanal (Additive White Gaussian Noise) ausgelegten MAP-Decoder (Maximum A Posteriori) ermittelt. Die Struktur solcher Empfänger per se ist aus dem Stand der Technik bestens bekannt.

Besonders vorteilhaft ist es, wenn der Zeitbereich $k_0 T$ im wesentlichen einem Dehnungsfaktor $k_0 \cong 50$ entspricht. Dann verhält sich nämlich die erfindungsgemässe Datenübertragung über einen Fadingkanal von aussen gesehen wie die Datenübertragung über einen AWGN-Kanal mit erhöhtem Rauschanteil. Folglich kann der Anwender eine zusätzliche Codierung der Daten vornehmen, ohne dass Gefahr besteht, einen Konflikt mit der erfindungsgemässen Filterung hervorzurufen.

Eine markante Verbesserung der Fehlerrate ergibt sich, wenn im Empfänger die Ermittlung der digitalen Daten im Sinn eines Feed-Forward-Prinzips in mehreren Stufen erfolgt. In einer gegebenen Stufe wird

a) aus den in einer vorhergehenden Stufe ermittelten Daten und einem verbesserten Verstärkungsfaktor

$$y_\mu{}^{(i+1)} = \frac{x_\mu{}^*}{x_\mu{}^* x_\mu + \beta^{(i+1)} N_0/E_s},$$

ein ISI-Signal gewonnen,

b) das ISI-Signal gewichtet,

c) das gewichtete ISI-Signal vom geeignet verzögerten und mit dem verbesserten Verstärkungsfaktor multiplizierten Uebertragungssignal subtrahiert und

d) das so korrigierte Uebertragungssignal erneut mit dem inversen Pulsdehnungsfilter regeneriert wird, worauf die digitalen Daten erneut ermittelt werden.

Der springende Punkt beim Feedforward-Empfänger liegt darin, dass zuerst eine vorläufige Schätzung der Daten vorgenommen wird, dann mit dieser Schätzung näherungsweise die ISI ermittelt wird und dann für die nächste Stufe das mit Hilfe der angenäherten ISI bereinigte Empfangssignal verwendet wird.

Ein Vorteil dieses Empfängers besteht auch darin, dass an den verschiedenen Stufen unterschiedlich gute Daten abgegriffen werden können. Ein digitalisiertes Sprachsignal (das nicht so hohe Anforderungen an die Fehlerwahrscheinlichkeit stellt) wird z.B. vorzugsweise an der ersten Stufe abgegriffen, weil da die Datenverzögerung noch relativ gering ist. Dagegen Daten, die mit geringerer Fehlerwahrscheinlichkeit übertragen werden müssen (dafür weniger zeitkritisch sind), können an späteren Stufen abgegriffen werden.

Im Bestreben eine gute Datenübertragung mit akzeptablem Aufwand zu erreichen, werden zum Ermitteln der Daten vurzugsweise nicht mehr als drei Stufen eingesetzt.

Um mit dem Feedforward-Prinzip einen Gauss'schen Kanal imitieren zu können, sollte der Zeitbereich $k_0T$ im wesentlichen einem Dehnungsfaktor $k_0 \cong 100$ entsprechen.

Das Pulsdehnungsfilter führt mit Vorteil gleichzeitig ein Interleaving der Symbole durch. Zu diesem Zweck werden ist das Pulsdehnungsfilter ein Transversalfilter mit einer Stufenverzögerung LT ist, die einem geeigneten Mehrfachen n der Symboldauer T entspricht

Die Pulsdehnung im Sinn der Smeared Date Transmission zeichnet sich vorzugsweise dadurch aus, dass
a) der Zeitbereich $k_0T$ viel grösser als ein mittlerer zeitlicher Abstand $T_a$ der multiplikativen Störungen ist,
b) eine mittlere Stördauer $T_d$ der statistisch verteilten zeitselektiven Störungen grösser ist als eine Symboldauer T, und
c) das Pulsdehnungsfilter im wesentlichen einen konstanten Amplitudengang und eine lineare Verzögerung der Gruppenlaufzeit aufweist.

Damit wird die Symbolenergie optimal über den gegebenen Zeitbereich $k_0T$ verteilt. Ferner muss der Amplitudengang im Empfänger nicht durch eine separates Filter kompensiert werden.

Im einzelnen ist das erfindungsgemässe Verfahren so ausgeführt, dass
a) die über den Zeitbereich $k_0T$ verschmierten Symbole im Sender mittels eines Pulsformers in ein Basisbandsignal transformiert werden,
b) das Basisbandsignal mittels einer hochfrequenten Trägerschwingung durch den Kanal zum Empfänger übertragen wird und
c) dort mittels eines inversen Pulsformers in ein gestörtes Empfangssignal übergeführt wird zwecks nachfolgender Fadingkompensation.

Die Erfindung eignet sich insbesondere für die lineare Mudulation im Sinn eines PSK-Verfahrens mit höchstens 8 Stufen oder eines QAM-Verfahrens mit höchstens 16 Stufen. In diesem Fall haben die Signalpunkte im Phasenraum einen hinreichend grossen Abstand voneinander.

Es versteht sich, dass sich die Erfindung auch auf eine Vorrichtung bezieht, die sich unmittelbar aus dem beschriebenen Verfahren herleiten lässt.

Aus der Gesamtheit der abhängigen Patentansprüchen ergeben sich weitere vorteilhafte Ausführungsformen.

## Kurze Beschreibung der Zeichnungen

Nachfolgend soll die Erfindung anhand von Ausführungsbeispielen und im Zusammenhang mit den Zeichnungen näher erläutert werden. Es zeigen:

Fig. 1    ein Blockschaltbild einer Vorrichtung zur Durchführung des erfindungsgemässen PAM-Verfahrens mit Smearing/Desmearing;
Fig. 2    eine Darstellung der durch das Smearing-Filter erzeugten Energieverteilung;
Fig. 3    ein Blockschaltbild eines FIR-Filters zur Pulsdehnung;
Fig. 4    ein Blockschaltbild eines Fading-Equalizers;
Fig. 5    ein Blockschaltbild eines Empfängers mit Feedforward-Kaskade;
Fig. 6    ein Blockschaltbild eines ISI-Detektors; und
Fig. 7    eine Darstellung der Fehlerwahrscheinlichkeit in Abhängigkeit des Rauschabstandes für verschiedene Ausführungsformen der Erfindung.

Die in den Zeichnungen verwendeten Bezugszeichen und deren Bedeutung sind in der Bezeichnungsliste zusammenfassend aufgelistet. Grundsätzlich sind in den Figuren gleiche Teile mit gleichen Bezugszeichen versehen.

## Wege zur Ausführung der Erfindung

Die Erfindung geht aus von einem linearen Modulationsverfahren zur Uebertragung von digitalen Daten. D.h., das zu übertragende (im allgemeinen komplexwertige) Basisbandsignal s(t) ist eine Summe von skalierten und zeitverschobenen Basisbandpulsen g(t):

$$(I) \qquad s(t) = \sum_{\mu} s_{\mu} \, g(t-\mu T)$$

5

Es wird vorausgesetzt, dass die um $\mu T$ zeitverschobenen Pulse $g(t-\mu T)$ eine Menge orthonormaler Funktionen bilden.

Die verschiedenen Formen und Eigenschaften solcher Verfahren sind dem Fachmann hinlänglich vertraut (siehe z.B. das Standardwerk "Digital Transmission Theory", S. Benedetto, E. Biglieri und V. Castellani, Prentice-Hall Inc. 1987, Kapitel 5, pp. 195-269). Im folgenden wird nun gezeigt, wie ein bekanntes PAM-Verfahren durch erfindungsgemässe Pulskompression auf Fading-Kanälen verbessert werden kann.

Zur mathematischen Beschreibung der Uebertragung wird die komplexe Basisbandnotation verwendet:

$$(II) \qquad r(t) = x(t)s(t) + n(t)$$

$x(t)$ beschreibt den komplexwertigen Fadingprozess (d.h. der Schwund beeinträchtigt sowohl Amplitude als auch Phase des Basisbandsignals) und $n(t)$ ein additives (stationäres und mittelwertfreies) komplexwertiges Gauss'sches Rauschen mit Varianz $N_0$. Die Erfindung geht davon aus, dass das Fading verhältnismässig langsam ist. In mathematischer Notation soll also folgende Näherung gelten:

$$(III) \qquad r(t) \approx \sum_{\mu} s_{\mu}\, x(\mu T)\, g(t-\mu T) + n(t)$$

Um im Empfänger eine ausreichende Statistik des zeitkontinuierlichen Empfangssignals $r(t)$ zu erhalten, wird in bekannter Weise der Ausgang eines Matched Filters $g(-t)$ zu den Zeitpunkten $t = \mu T$ abgetastet. Aufgrund der Orthonormalität der Basisbandpulse $g(t-\mu T)$ wird das additive Rauschen $n(t)$ am genannten Ausgang zu einer Folge von statistisch unabhängigen Gauss'schen Zufallsvariablen $n_{\mu}$ (mittelwertfrei, Varianz $= N_0$). In zeitdiskreter Notation sieht Gleichung (III) somit wie folgt aus:

$$(IV) \qquad r_{\mu} = x_{\mu} s_{\mu} + n_{\mu}, \qquad \text{wobei } x_{\mu} = x(\mu T).$$

Infolge des langsamen Fadings sind die Fadingkoeffizienten $x_{\mu}$ statistisch abhängig. Durch geeignetes Interleaving der zu übertragenden Symbole (d.h. ursprünglich benachbarte Symbole werden nicht benachbart übertragen) können die Fadingkoeffizienten statistisch unabhängig gemacht werden.

Im folgenden wird die Erfindung im einzelnen erläutert, wobei die gegebene mathematische Darstellung als Leitbild dienen kann.

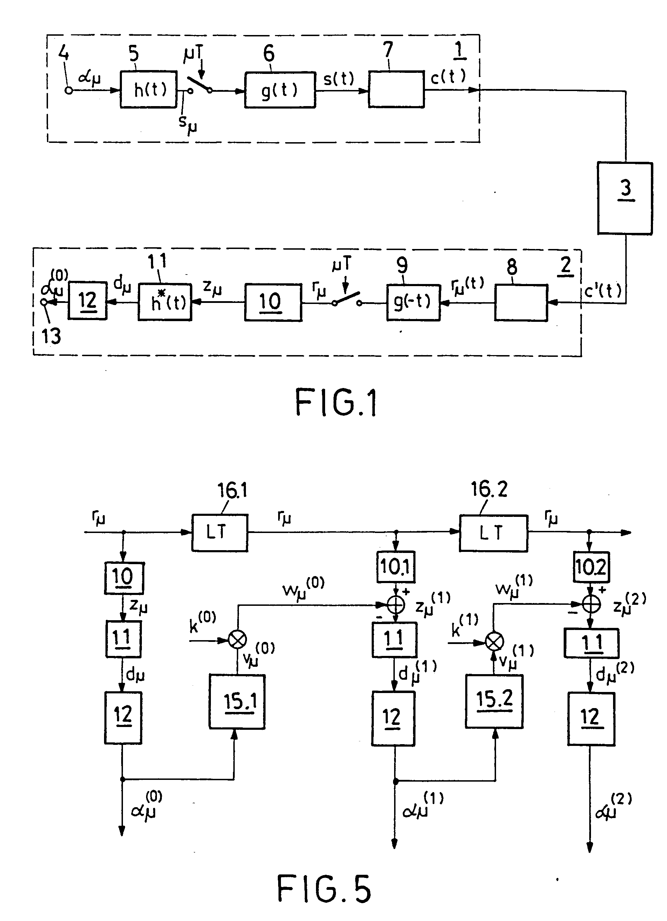

Fig. 1 zeigt ein Blockschaltbild einer erfindungsgemässen Vorrichtung. Ziel ist es, digitale Daten, welche in Form von (z.B. binären) Symbolen $\alpha_{\mu}$ in einem gegebenen zeitlichen Abstand T (Symboldauer) vorliegen, von einem Sender 1 über einen Fadingkanal 3 zu einem Empfänger 2 zu übertragen.

Zu diesem Zweck werden die Symbole $\alpha_{\mu}$ einer Datenquelle 4 in einem Pulsdehnungsfilter 5 (Smearing-Filter mit Stossanwort $H(t)$) zu einem digitalen Basisbandsignal $s_{\mu}$ verarbeitet. Die Energie (Information) eines Symbols wird dabei über einen gegebenen Zeitbereich $k_0 T$ möglichst gleichmässig verteilt. Wenn der Dehnungsfaktor $k_0$ entsprechend der Erfindung viel grösser als Eins ist, dann überlagern sich in einem Zeitintervall der Länge T auch sehr viele Symbole. Aufgrund der Zufälligkeit der Symbole $\alpha_{\mu}$ ist das Basisbandsignal $s_{\mu}$ ein quasi-analoges, näherungsweise Gauss'sches Signal.

Das digitale Basisbandsignal $s_{\mu}$ wird einem Pulsformer 6 (welcher als Impulsantwort z.B. einen Nyquistpuls hat) zugeführt, welcher ein zeitkontinuierliches Basisbandsignal $s(t)$ erzeugt. Dies wird mit Hilfe eines Modulators 7 einer Trägerschwingung aufmoduliert.

Die modulierte Trägerschwingung $c(t)$ wird über den Fadingkanal 3 übertragen. Dieser zeichnet sich durch zeitselektive Schwunderscheinungen aus. D.h. das Signal wird durch starke, multiplikative, statistisch verteilte Störungen und durch ein additives Rauschen beeinträchtigt. Die Störungen lassen sich durch deren mittlere Stördauer $T_d$ und deren mittlerer zeitlicher Abstand $T_a$ charakterisieren.

Gemäss der Erfindung ist nun die Symboldauer T kleiner als die mittlere Stördauer $T_d$, d.h. das Fading kann nicht einfach ausgemittelt werden innerhalb eines Abtastintervalls. Gleichzeitig ist aber der Zeitbereich $k_0 T$, über den ein Symbol verteilt wird, viel grösser (z.B. zehn Mal grösser) als der mittlere zeitliche Abstand $T_a$ der Störungen. Aufgrund der sehr starken Pulsdehnung werden demzufolge in einem weiten Rahmen die Störpulse auf eine raffinierte Weise also trotzdem ausgemittelt.

Der Empfänger 2 demoduliert ein Demodulator 8 das gestörte Signal $c'(t)$ zu einem zeitkontinuierlichen Empfangssignal $r(t)$. Dieses wird in einem Matched Filter 9 (angepasst in bezug auf Pulsformer 7) verarbeitet und zu Zeitpunkten $\mu T$ ($\mu = \ldots-1, 0, 1, 2, \ldots$) abgetastet. Das resultierende zeitdiskrete Empfangssignal $r_{\mu}$ entspricht dem durch den Fadingkanal gestörten Basisbandsignal $s_{\mu}$.

Das Empfangssignal $r_{\mu}$ wird nun in einem (zeitvarianten) Fading-Equalizer 10 einer Schwundkompensation unterzogen. Dabei wird zunächst mit Hilfe einer an sich bekannten Kanalschätzung (siehe z.B. "Rayleigh Fading Compensation Method for 16-QAM in Digital Land Mobile Radio Channels", S. Sampei und T. Sunaga, Proc. 39th IEEE Vehicular Technology Conf., Mai 1989, pp. 640-646) der Fadingkoeffizient $x_{\mu}$ geschätzt und dann der erfindungsgemässe Verstärkungsfaktor $y_{\mu}$ ermittelt:

$$(V) \qquad y_\mu = \frac{x_\mu{}^*}{x_\mu{}^* x_\mu + \beta^{(0)} N_0/E_s},$$

Dabei gilt:

$N_0 =$      spektrale Leistungsdichte des Rauschens

$E_s =$      mittlere Symbolenergie

$\beta^{(0)} =$      Korrekturfaktor.

Der Rauschabstand $E_s/N_0$ lässt sich im Empfänger mit bekannten Mitteln bestimmen. Der Korrekturfaktor $\beta^{(0)}$ trägt dem reduzierten Rauschen in einem eindimensionalen Signalformat (z.B. bei 2-PSK) Rechnung:

$$(VI) \qquad \beta^{(0)} = \begin{cases} 1/2 & , \text{ für eindimensionales Signalformat} \\ 1 & , \text{ für zweidimensionales Signalformat} \end{cases}$$

Durch Multiplikation des Empfangssignals $r_\mu$ mit dem zugehörigen Verstärkungsfaktor $y_\mu$ wird ein abgeglichenes Signal $z_\mu$ erzeugt.

Das Signal $z_\mu$ wird in einem (zeitinvarianten) Transversalfilter 11 (Stossantwort $h^*(t)$) einer inversen Pulsdehnung unterzogen. Im wesentlichen hat dieses eine zur ursprünglichen Pulsdehnung zeitinverse Stossantwort. Dadurch werden die zeitverschmierten Symbole (abgesehen von der durch den Fading-Equalizer bedingten ISI) regeneriert.

Der zeitvariante Fading-Equalizer 10 und die zeitinvariante inverse Pulsdehnung im Transveraslfilter 11 bilden zusammen das erfindungsgemässe zeitvariante Transversalfilter, an dessen Ausgang die mittleren Fehlerquadrate minimal sind.

Aus dem im Transversalfilter 11 regenerierten Signal $d_\mu$ werden die digitalen Daten $\alpha_\mu{}^{(0)}$ mit einem für einen AWGN-Kanal ausgelegten MAP-Decoder 12 ermittelt. Dieser maximiert bekanntlich die Wahrscheinlichkeitsdichte der geschätzten Symbolfolge bei bekanntem Empfangssignal $r(t)$ und gegebenem Kanal $x(t)$ gegenüber allen möglichen Symbolfolgen. Der für einen AWGN-Kanal ausgelegte MAP-Decoder ist an sich bekannt und lässt sich besonders einfach (d.h. mit niederer Komplexität) realisieren.

Wenn beispielsweise im Pulsformer Nyquistpulse verwendet werden, dann führt der MAP-Decoder 12 eine einfache (symbolweise) Schwellenwertdetektion durch (z.B. in einem binären Alphabet: $\alpha_\mu{}^{(0)} = +1$ für $d_\mu > 0$ und $\alpha_\mu{}^{(0)} = -1$ für $d_\mu \leqq 0$).

Ein wesentlicher Punkt der Erfindung ist die Verwendung des Pulsdehnungsfilters 5 und seines Gegenpartes 6. Sie sorgen dafür, dass die Information eines Symbols über einen im Vergleich zum Fadingabstand $T_a$ grossen Zeitbereich $k_0 T$ verteilt wird (zeitliche Vielfachübertragung; time diversity).

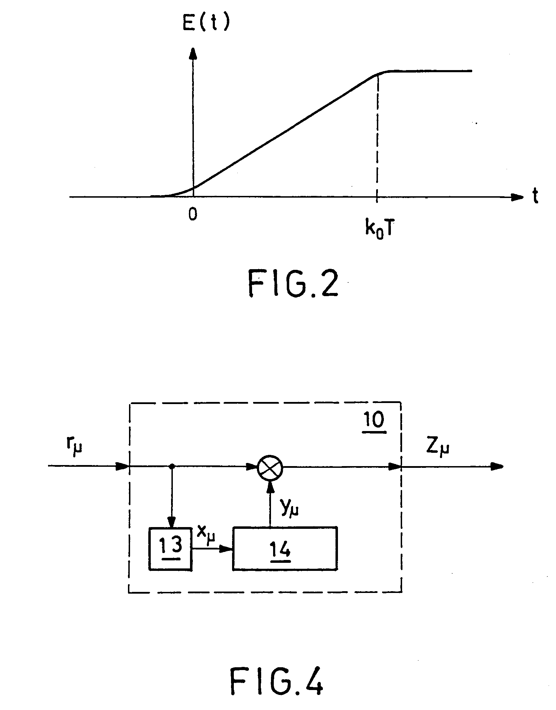

Fig. 2 zeigt einen für ein Smearing-Filter typischen Verlauf der Energieverteilung

$$(VII) \qquad E(t) = \int_{-\infty}^{t} h^*(t_1) h(t_1) \, dt \quad .$$

Zwischen einem beliebig festgelegten Anfangszeitpunkt $t = 0$ und einem Endzeitpunkt $k_0 T$ verläuft die Energie im wesentlichen linear steigend. Ausserhalb dieses Zeitbereiches $k_0 T$ ändert sie sich dagegen (nahezu) nicht.

Idealerweise zeigt ein solches Smearing-Filter einen linearen Amplitudengang und eine linear steigende (oder fallende) Gruppenlaufzeit. Solche Filter sind z.B. aus der DE-37 30 399 bekannt. Sie lassen sich vorteilhaft mit einem FIR-Filter (Finite Impulse Response) realisieren.

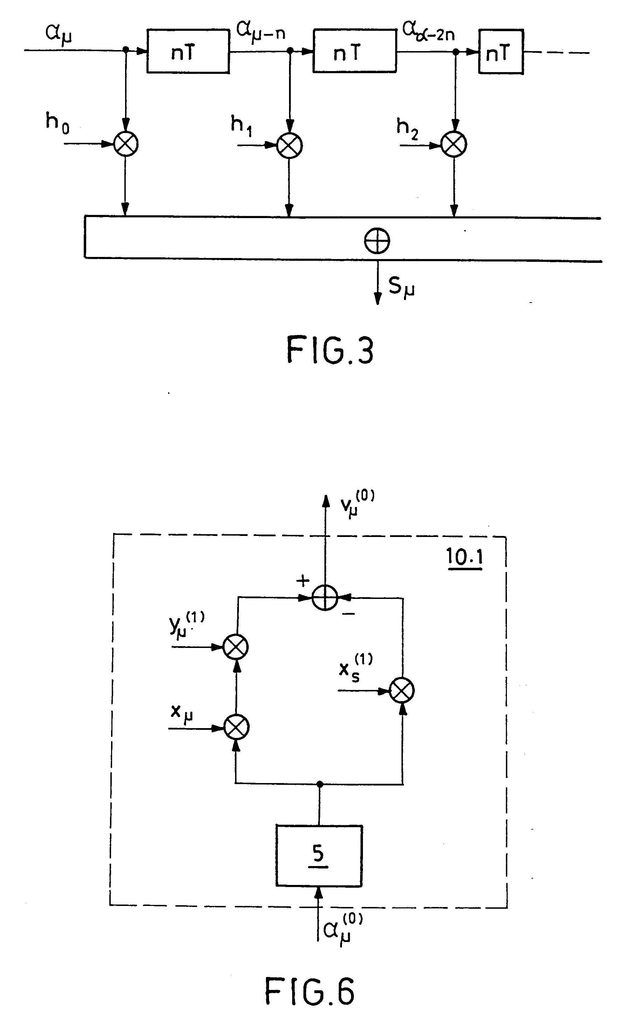

Fig. 3 zeigt ein Blockschaltbild eines solchen FIR-Filters. Die eintreffenden Symbole $\alpha_\mu$ werden z.B. auf M Stufen um ein ganzzahliges Vielfaches n der Symboldauer T verzögert. Auf jeder Stufe wird das Symbol $(\alpha_\mu, \alpha_{\mu-n}, \alpha_{\mu-2n},...)$ mit einem Filterkoeffizienten $h_i$, $i = 0...M$, multipliziert. Schliesslich wird das digitale Basisbandsignal $s_\mu$ durch Summation aller Produkte $h_i \alpha_{\mu-inT}$, $i = 0...M$, gewonnen. In der Regel genügt zur Realisierung eines Pulsdehnungsfilter mit Dehnungsfaktor $k_0$ ein FIR-Filter mit $M \approx 1.2\, k_0$ Stufen.

Gemäss einer bevorzugten Ausführungsform wird die Zahl n gerade so gross gewählt, dass näherungsweise perfektes Interleaving entsteht (d.h. dass die Fadingkoeffizienten im wesentlichen statistisch unabhängig werden). Das FIR-Filter nimmt also eine Doppelfunktion wahr (Pulsdehnung + Interleaving).

Das inverse Pulsdehnungsfilter 11 ist in analoger Weise aufgebaut und nimmt auch das Deinterleaving vor. Bei einem bevorzugten Filter mit konstantem Amplitudengang und linearer Gruppenlaufzeit wird die Inversion durch eine Zeitumkehr der Stossanwort ($h_0 \to h_M$, $h_1 \to h_{M-1}$, ...) erreicht.

Ein zentraler Block des erfindungsgemässen Empfängers ist der Fading-Equalizer 10 (Fig. 1). Er verstärkt das Signal $z_\mu$ in Abhängigkeit vom Rauschabstand und den Fadingkoeffizienten.

Fig. 4 zeigt ein Blockschaltbild des Fading-Equalizers 10. Aus dem zeitdiskreten Empfangssignal $r_\mu$ wird in einem Kanalschätzer 13 der momentane Fadingkoeffizient $x_\mu$ bestimmt. Diese Schätzung kann auf verschiedene Arten realisiert werden. Es ist sowohl eine Schätzung denkbar, die auf periodisch übertragenen, bekannten Symbolen beruht (data aided), als auch eine, die von der geschätzten Symbolsequenz (decision directed) ausgeht. Der zitierte Artikel von S. Sampei et al. kann als Beispiel einer Kanalschätzung dienen. Aus dem Fadingkoeffizient $x_\mu$ wird in einer Rechenschaltung 14 der Verstärkungsfaktur $y_\mu$ durch Auswerten der Formel (V) gewonnen.

Mit dem bis anhin beschriebenen ersten Ausführungsbeispiel steht ein Datenübertragungssystem zur Verfügung, welches das Fading des Kanals egalisiert und die Symbole nach dem MSE-Prinzip (Mean Square Error) detektiert. Der springende Punkt bei diesem System liegt darin, dass die erfindungsgemässe SDT über einen Fadingkanal mittels digitaler PAM ein sogenanntes "AWGN-Aequivalent" hat, vorausgesetzt der Dehnungsfaktor $k_0$ ist hinreichend gross. Mit anderen Worten: Im genannten System wird der Fadingprozess in ein erhöhtes Gauss'sches Rauschen umgesetzt. Somit können mit der Erfindung all jene Codierverfahren kombiniert werden, die sich auf die Datenübertragung über einen AWGN-Kanal beziehen.

Simulationen haben gezeigt, dass ein Dehnungsfaktor $k_0 \geqq 50$ sicher hinreichend gross ist für den im ersten Ausführungsbeispiel beschriebenen, einfachen MSE-Empfänger.

Beim nächsten Ausführungsbeispiel handelt es sich um eine verbesserte Detektion, die allerdings etwas aufwendiger als der MSE-Empfänger ist. Hierbei wird versucht, aus den in einer ersten Stufe geschätzten Symbolen möglichst gut die kanalinduzierte Intersymbolinterferenz zu schätzen und in einer nächsten Stufe der Detektion zu berücksichtigen.

Fig. 5 zeigt ein entsprechendes Blockschaltbild desjenigen Teils des Empfängers, der das zeitdiskrete Empfangssignal $r_\mu$ verarbeitet. Die Grundstufe des Feedforward-Detektors arbeitet wie der anhand der Fig. 1 erläuterte MSE-Empfänger. Das Empfangssignal $r_\mu$ wird also zunächst im Fading-Equalizer 10 verstärkt, dann wird mit dem Transversalfilter 11 die inverse Pulsdehnung durchgeführt, so dass zum Schluss mit dem MAP-Decoder 12 eine erste Schätzung der Symbole $\alpha_\mu^{(0)}$ vorgenommen werden kann.

Diese erste Schätzung ist mit einer gewissen Fehlerwahrscheinlichkeit behaftet. Um eine verbesserte Schätzung zu erhalten, wird in einem ISI-Detektor 15.1 aufgrund der ersten Schätzung die Intersymbolinterferenz $v_\mu^{(0)}$ geschätzt und entsprechend der Zuverlässigkeit $k^{(0)}$ gewichtet (siehe Formel (X) weiter unten). Das resultierende Signal $w_\mu^{(0)}$ wird dann in der nächsten Stufe verwendet zur Reduktion der ISI.

Für die erste Feedforward-Stufe wird das Empfangssignal $r_\mu$ zunächst durch ein Verzögerungsglied 16.1 um LT verzögert. Dadurch wird die Verzögerung kompensiert, die zur Bestimmung von $w_\mu^{(0)}$ benötigt wird. Sie entspricht im wesentlichen dem zweifachen des Dehnungskoeffizienten, d.h. $L \approx 2k_0$.

Das verzögerte Empfangssignal $r_\mu$ wird in einem Fading-Equalizer 10.1 verstärkt. Der hier verwendete Verstärkungsfaktor $y_\mu^{(i+1)}$ (siehe Formel (VIII) weiter unten) unterscheidet sich im allgemeinen von demjenigen in der Grundstufe. Vom Ausgangssignal des Fading-Equalizers 10.1 wird das Signal $w_\mu^{(0)}$ subtrahiert. Das resultierende, in erster Näherung ISI-freie Signal wird danach wie in der Grundstufe der inversen Pulsdehnung (Transversalfilter 11) und der Detektion (MAP-Decoder 12) unterworfen. Damit liegt eine verbesserte Schätzung der Symbole $\alpha_\mu^{(1)}$ vor.

Sinngemäss können weitere Stufen implementiert werden. Jede Stufe erhöht die Komplexität des Empfängers, verbessert aber gleichzeitig die Fehlerwahrscheinlichkeit der geschätzten Symbole. Untersuchungen haben gezeigt, dass bereits mit einer einzigen Feedforward Stufe ziemlich gute Resultate erzielt werden können. Ebenso wurde erkannt, dass sich die Detektionsleistung des Empfängers ab insgesamt drei Stufen nur noch marginal verbessert.

Anhand von Fig. 6 soll nun der ISI-Detektor 10.1 beispielhaft für alle Feedforward-Stufen erläutert werden.

Die vorläufige Schätzung der Symbole $\alpha_\mu^{(0)}$ wird als erstes mit dem Pulsdehnungsfilter 5, wie es im Sender vorhanden ist, verschmiert. Aus dem resultierenden Signal $s_\mu^{(0)}$ wird dann die Intersymbolinterferenz $v_\mu^{(0)}$ gemäss folgender Formel gewonnen (Stufe i+1 = 1):

$$(\text{VIII}) \qquad v_\mu^{(i)} = s_\mu^{(i)} x_\mu y_\mu^{(i+1)} - s_\mu^{(i)} x_s^{(i+1)}$$

$$(\text{IX}) \qquad y_\mu^{(i+1)} = \frac{x_\mu^*}{x_\mu^* x_\mu + \beta^{(i+1)} N_0/E_s},$$

$$(\text{X}) \qquad \beta^{(i+1)} = \frac{1}{1 - \{k^{(i)}\}^2}$$

$$(\text{XI}) \qquad k^{(i)} = \frac{E[s_\mu^* s_\mu^{(i)}]^*}{E[s_\mu^{(i)*} s_\mu^{(i)}]}$$

$$(\text{XII}) \qquad x_s^{(i+1)} = E[x_\mu y_\mu^{(i+1)}]$$

(Mit E[·] wird in bekannter Weise der Erwartungswert (resp. Mittelwert) einer statistischen Variablen bezeichnet; ferner stellt $x_\mu$ den Fadingkoeffizienten gemäss Kanalschätzung dar.)

Zur Gewichtung der Intersymbolinterferenz $v_\mu^{(0)}$ wird der Faktor gemäss Gleichung (X) herangezogen. Er gibt die Zuverlässigkeit der ISI-Schätzung an. Unter der Voraussetzung der Ergodizität (was in der Praxis durchwegs gültig sein dürfte) gilt

$$(XIII) \qquad k^{(i)} = \frac{E[\alpha_\mu^* \alpha_\mu^{(i)}]^*}{E[\alpha_\mu^{(i)*} \alpha_\mu^{(i)}]}$$

Der Erwartungswert wird bezüglich aller möglicher Symbole $\alpha_\mu$ des Senders (bei gegebenem Kanalrauschen) gebildet. In Abhängigkeit vom Rauschabstand $E_b/N_0$ kann somit im voraus eine Tabelle für $k^{(i)}$ erstellt werden, aus welcher der Empfänger nur noch den zum gemessenen Rauschen gehörenden Wert auszulesen braucht.

Im binären Fall beispielsweise (d.h. $\alpha_\mu = [+1, -1]$) hängt $E[\alpha_\mu * \alpha_\mu^{(i)}]$ von der Fehlerwahrscheinlichkeit $P_e$ wie folgt ab:

$$(XIV) \qquad E[\alpha_\mu * \alpha_\mu^{(i)}] = 1 - 2P_e$$

Insbesondere wenn eine zusätzliche Codierung durchgeführt wird, welche die Bestimmung von $P_e$ erlaubt, ist die Berechnung von $k^{(i)}$ also besonders einfach.

Es ist anzumerken, dass Fehler beim Bestimmen von $k^{(i)}$ nicht sehr kritisch sind. Sie haben höchstens zur Folge, dass das Verfahren weniger schnell konvergiert. Es ist deshalb durchaus zulässig, diesen Wert, der im Prinzip von der Zeit (weil $E_s/N_0$ zeitvariant ist) und der Stufe abhängt, innerhalb von einer oder mehreren Stufeals konstant anzunehmen.

Auch der Feedforward-Empfänger hat ein AWGN-Aequivalent, wenn der Dehnungsfaktor $k_0 \geqq 100$ ist.

Um einen Eindruck über die Leistungsfähigkeit eines erfindungsgemässen Uebertragungsverfahrens zu vermitteln, werden die beiden Ausführungsformen mit dem Stand der Technik verglichen.

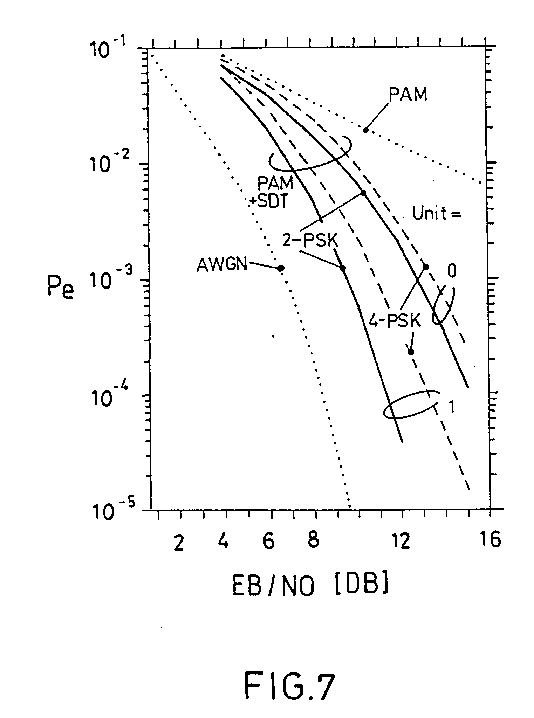

Fig. 7 zeigt eine Darstellung der Fehlerwahrscheinlichkeit $P_e$ in Abhängigkeit vom Rauschabstand $E_b/N_0$. Die mit AWGN bezeichnete, punktierte Kurve gibt die Leistung in Abwesenheit von Schwunderscheinungen (d.h. beim zeitinvarianten Kanal) an. Dies ist eindeutig die untere Grenze für $P_e$.

Alle anderen Kurven betreffen einen Kanal mit Rayleigh Fading (zeitvarianter Kanal). Es ist dabei berücksichtigt worden, dass bereits die Kanalschätzung mit Fehlern behaftet ist (was in der Praxis auch durchwegs der Fall sein wird).

Die mit "PAM" markierte, punktierte oberste Kurve gibt das Verhalten eines konventionellen PAM-Verfahrens (Stand der Technik) ohne SDT an. Die verbleibenden vier Kurven "PAM+SDT" veranschaulichen die Leistungsfähigkeit der Erfindung.

Die Untersuchungen wurden für 2-PSK (eindimensionales Signalformat) und 4-PSK (zweidimensionales Signalformat) vorgenommen. Für jedes der beiden Verfahren ist die Fehlerwahrscheinlichkeit eines MSE-Empfängers ohne ("0") und mit einer ("1") Feedforward-Stufe gezeigt. Die erfindungsgemässe SDT arbeitet bei einem Fadingkanal offenbar viel besser als die herkömmliche PAM. Ebenso verbessert schon eine einzige Feedforward-Stufe das Verhalten von $P_e$. Wenn die Kanalschätzung perfekt wäre, unterschieden sich ein- und zweidimensionale Verfahren nicht. Da dies aber nicht zutrifft, reagiert 4-PSK empfindlicher auf Kanalschätzungsfehler und ist demzufolge etwas schlechter.

Die Erfindung eignet sich für PSK-Modulation gleich gut wie für QAM. Bei QAM beträgt die Stufenzahl vorzugsweise nicht mehr als sechzehn und beim PSK nicht mehr als 8.

Abschliessend kann festgehalten werden, dass mit der Erfindung ein Verfahren mit geringer Komplexität (linear abhängig vom Dehnungskoeffizient $k_0$) geschaffen worden ist, welches eine schnelle, bandbreiteneffiziente Uebertragung von digitalen Daten über schwundbehaftete Kanäle ermöglicht.

## Bezeichnungsliste

1 - Sender; 2 - Empfänger; 3 - Fadingkanal; 4 - Datenquelle; 5 - Pulsdehnungsfilter; 6 - Pulsformer; 7 - Modulator; 8 - Demodulator; 9 - Matched Filter; 10, 10.1, 10.2 - Fading Equalizer; 11 - Transversalfilter; 12 - MAP-Decoder; 13 - Kanalschätzer; 14 - Rechenschaltung; 15.1, 15.2 - ISI-Detektor; 16.1, 16.2 - Verzögerungsglied; $c'(t)$ - gestörte Trägerschwingung; $c(t)$ - modulierte Trägerschwingung; $d_\mu$ - regeneriertes Signal; $E_s$ - mittlere Symbolenergie; $g(t)$ - Basisbandpuls; $g(-t)$ - Matched-Filter; $H(t)$ - Pulsdehnung; $h^*(t)$ - inverse Pulsdehnung; $h_\mu$ - Filterkoeffizient; $k_0$ - Dehnungsfaktor; $n(t)$ - Rauschen; $N_0$ - Varianz des Rauschens; $\alpha_\mu$ - gesendete Symbole; $\alpha_\mu^{(0)}$ - geschätzte Symbole; $r(t)$ - zeitkontinuierliches Empfangssignal; $r_\mu$ - zeitdiskretes Empfangssignal; $s(t)$ - zeitkontinuierliches Basisbandsignal; $s_\mu$ - Basisbandsignal; $\beta^{(0)}$ - Korrekturfaktor; $T$ - Symboldauer; $T_a$ - mittlerer zeitlicher Abstand; $T_d$ - mittlere Stördauer; $v_\mu$ - Intersymbolinterferenz; $x(t)$ - Fadingprozess; $x_\mu$ - Fadingkoeffizient; $y_\mu$ - Verstärkungsfaktor; $z_\mu$ - abgeglichenes Signal;

**Patentansprüche**

1. Verfahren zur Übertragung von digitalen Daten über einen zeitvarianten und mit additivem Rauschen behafteten Kanal (3), wobei in einem Sender (1) die zu übertragenden digitalen Daten in Form von Symbolen ($\alpha_\mu$) mit einer Symboldauer T auftreten, welches Verfahren folgende Kombination von Schritten aufweist:
   a) Die Symbole werden im Sender (1) - im Sinn der Smeared Data Transmission - mit einem Pulsdehnungsfilter (5) mit einem im wesentlichen linearen Amplitudengang und linear steigender oder fallender Gruppenlaufzeit über einen Zeitbereich $k_0T$ verschmiert;
   b) die zeitlich verschmierten Symbole werden gemäss einem linearen Modulationsverfahren in Form eines Uebertragungssignals über den zeitvarianten Kanal zu einem Empfänger (2) übertragen;
   c) im Empfänger (2) wird eine Kanalschätzung zur Ermittlung der Zeitabhängigkeit des Kanals (3) durchgeführt;
   d) das empfangene Übertragungssignal wird in Abhängigkeit von der Kanalschätzung in einem zeitvarianten Transversalfilter (10, 11) so gefiltert, dass am Eingang eines nachfolgenden Decoders (12) der mittlere quadratische Fehler minimal ist, wobei zur Decodierung der über einen zeitselektiven, d. h. einen mit multiplikativen Störungen behafteten Kanal übertragenen digitalen Daten das zeitvariante Transversalfilter aufgeteilt ist in einen von der Kanalschätzung abhängigen Fading-Equalizer (10) und ein nachfolgendes, zeitinvariantes inverses Pulsdehnungsfilter (11).

2. Verfahren nach Anspruch 1, dadurch gekennzeichnet, dass
   a) im Fading-Equalizer das Übertragungssignal zwecks Kompensation der Kanalstörungen mit einem Verstärkungsfaktor

$$y_\mu = \frac{x_\mu{}^*}{x_\mu{}^* x_\mu + \beta^{(0)} N_0/E_s} ,$$

   wobei

   $x_\mu$ = geschätzter Fadingkoeffizient
   $N_0$ = spektrale Leistungsdichte des Rauschens
   $E_s$ = mittlere Symbolenergie
   $\beta(0)$ = Korrekturfaktor,
   multipliziert wird und
   b) nach dem Transversalfilter die digitalen Daten mit einem für einen AWGN-Kanal ausgelegten MAP-Decoder ermittelt werden.

3. Verfahren nach einem der Ansprüche 1 oder 2, dadurch gekennzeichnet, dass der Zeitbereich $k_0T$ im wesentlichen einem Dehnungsfaktor $k_0 \geqq 50$ entspricht.

4. Verfahren nach einem der Ansprüche 1 bis 3, dadurch gekennzeichnet, dass im Empfänger im Sinn eines Feed-Forward-Prinzips die Ermittlung der digitalen Daten in mehreren Stufen erfolgt, wobei
   a) aus den in einer vorhergehenden Stufe ermittelten Daten und einem verbesserten Verstärkungsfaktor

$$y_\mu{}^{(i+1)} = \frac{x_\mu{}^*}{x_\mu{}^* x_\mu + \beta^{(i+1)} N_0/E_s}$$

   ein ISI-Signal gewonnen wird,
   b) das ISI-Signal gewichtet wird,
   c) das gewichtete ISI-Signal vom geeignet verzögerten und mit dem verbesserten Verstärkungsfaktor multiplizierten Uebertragungssignal subtrahiert wird, und
   d) das so korrigierte Übertragungssignal erneut mit dem inversen Pulsdehnungsfilter regeneriert wird und die digitalen Daten erneut ermittelt werden.

5. Verfahren nach Anspruch 4, dadurch gekennzeichnet, dass zum Ermitteln der Daten nicht mehr als drei Stufen eingesetzt werden.

6. Verfahren nach einem der Ansprüche 4 oder 5, dadurch gekennzeichnet, dass der Zeitbereich $k_0T$ im wesentlichen einem Dehnungsfaktor $k_0 \geqq 100$ entspricht.

7. Verfahren nach einem der Ansprüche 1 bis 6, dadurch gekennzeichnet, dass das Pulsdehnungsfilter ein Transversalfilter mit einer Stufenverzögerung nT ist, die einem Mehrfachen n der Symboldauer T entspricht, so dass gleichzeitig ein Interleaving der Symbole durchgeführt wird.

**8.** Verfahren nach einem der Ansprüche 1 bis 7, dadurch gekennzeichnet, dass
a) der Zeitbereich $k_0T$ viel grösser als ein mittlerer zeitlicher Abstand der multiplikativen Störungen ist,
b) eine mittlere Stördauer $T_d$ der statistisch verteilten zeitselektiven Störungen grösser ist als eine Symbolauer T, und
c) das Pulsdehnungsfilter im wesentlichen einen konstanten Amplitudengang und eine lineare Verzögerung der Gruppenlaufzeit aufweist.

**9.** Verfahren nach einem der Ansprüche 1 bis 8, dadurch gekennzeichnet, dass
a) die über den Zeitbereich $k_0T$ verschmierten Symbole im Sender mittels eines Pulsformers in ein Basisbandsignal transformiert werden,
b) das Basisbandsignal mittels einer hochfrequenten Trägerschwingung durch den Kanal zum Empfänger übertragen wird und
c) dort mittels eines inversen Pulsformers in ein gestörtes Empfangssignal übergeführt wird zwecks nachfolgender Fadingkompensation.

**10.** Empfänger (2) zur Durchführung der Kanalschätzung des Verfahrens gemäss Anspruch 1, bei welchem Verfahren digitale Daten über einen zeitvarianten und mit additivem Rauschen behafteten Kanal (3) übertragen werden, wobei in einem Sender (1) die zu übertragenden digitalen Daten in Form von Symbolen ($\alpha_\mu$) mit einer Symboldauer T auftreten, wobei die Symbole im Sender (1) - im Sinn der Smeared Data Transmission - mit einem Pulsdehnungsfilter (5) mit einem im wesentlichen linearen Amplitudengang und linear steigender oder fallender Gruppenlaufzeit über einen Zeitbereich $k_0T$ verschmiert werden und wobei die zeitlich verschmierten Symbole gemäss einem linearen Modulationsverfahren in Form eines Uebertragungssignals über den zeitvarianten Kanal (3) zum Empfänger (2) übertragen werden, dadurch gekennzeichnet, dass der Empfänger (2)
a) einen Kanalschätzer (13) zur Ermittlung der Zeitabhängigkeit des Kanals (3) und
b) ein zeitvariantes Transversalfilter (10, 11) zum Filtern des empfangenen Uebertragungssignals in Abhängigkeit von der Kanalschätzung aufweist, welches Transversalfilter (10, 11) derart ausgeführt ist, dass am Eingang eines nachfolgenden Decoders (12) der mittlere quadratische Fehler minimal ist, wobei
c) zur Decodierung der über einen zeitselektiven, d. h. einen mit multiplikativen Störungen behafteten Kanal übertragenen digitalen Daten das zeitvariante Transversalfilter (10, 11) aufgeteilt ist in einen von der Kanalschätzung abhängigen Fading-Equalizer (10) und ein nachfolgendes, zeitinvariantes inverses Pulsdehnungsfilter (11).

**11.** Empfänger nach Anspruch 10, dadurch gekennzeichnet, dass im Fading-Equalizer (10) eine Rechenschaltung (14) vorgesehen ist zwecks Kompensation der Kanalstörungen mit Hilfe von Verstärkungsfaktoren

$$ y_\mu = \frac{x_\mu^*}{x_\mu^* x_\mu + \beta^{(0)} N_0/E_s}, $$

wobei
$x_\mu =$ geschätzter Fadingkoeffizient
$N_0 =$ spektrale Leistungsdichte des Rauschens
$E_s =$ mittlere Symbolenergie
$\beta^{(0)} =$ Korrekturfaktor.

## Claims

**1.** Method for transmitting digital data via a time-variant channel (3) affected by additive noise, the digital data to be transmitted occurring in a transmitter (1) in the form of symbols ($\alpha_\mu$) having a symbol duration T, which method has the following combination of steps:
a) the symbols are smeared - in the sense of smeared data transmission - in the transmitter (1) over a time range $k_0T$ by means of a pulse-expanding filter (5) having an essentially linear amplitude response and linearly rising or falling envelope delay;
b) the temporally smeared symbols are transmitted via the time-variant channel to a receiver (2) in accordance with a linear modulation method in the form of a transmission signal;
c) channel estimation is carried out in the receiver (2) in order to determine the time dependence of the channel (3);

d) the received transmission signal is filtered in a time-variant transverse filter (10, 11) as a function of the channel estimation in such a way that the mean square error is a minimum at the input of a downstream decoder (12), it being the case that for the purpose of decoding with the digital data transmitted via a time-selective channel, that is to say a channel affected by multiplicative disturbances, the time-variant transverse filter is split up into a fading equalizer (10) dependent on the channel estimation and a downstream, time-invariant inverse pulse-expanding filter (11).

2. Method according to Claim 1, characterized in that
a) for the purpose of compensating the channel disturbances, in the fading equalizer the transmission signal is multiplied by an amplification factor

$$y_\mu = \frac{x_\mu^*}{x_\mu^* x_\mu + \beta^{(0)} N_0/E_s} \, ,$$

it being the case that
$x_\mu =$ estimated fading coefficient
$N_0 =$ spectral power density of the noise
$E_s =$ mean symbol energy
$\beta^{(0)} =$ correction factor, and
b) downstream of the transverse filter the digital data are determined by means of a MAP decoder designed for an AWGN channel.

3. Method according to one of Claims 1 and 2, characterized in that the time range $k_0 T$ essentially corresponds to an expansion factor $k_0 \geqq 50$.

4. Method according to one of Claims 1 to 3, characterized in that the determination of the digital data is performed in a plurality of stages in the receiver in the sense of a feed-forward principle, it being the case that
a) an ISI signal is obtained from the data determined in a preceding stage and from an improved amplification factor

$$y_\mu^{(i+1)} = \frac{x_\mu^*}{x_\mu^* x_\mu + \beta^{(i+1)} N_0/E_s}$$

b) the ISI signal is weighted,
c) the weighted ISI signal is subtracted from the transmission signal, which is suitably delayed and multiplied by the improved amplification factor, and
d) the transmission signal thus corrected is regenerated anew by the inverse pulse-expanding filter, and the digital data are determined anew.

5. Method according to Claim 4, characterized in that no more than three stages are used to determine the data.

6. Method according to one of Claims 4 and 5, characterized in that the time range $k_0 T$ essentially corresponds to an expansion factor $k_0 \geqq 100$.

7. Method according to one of Claims 1 to 6, characterized in that the pulse-expanding filter is a transverse filter having a stage delay $nT$ which corresponds to a multiple $n$ of the symbol duration $T$, with the result that interleaving of the symbols is simultaneously carried out.

8. Method according to one of Claims 1 to 7, characterized in that
a) the time range $k_0 T$ is much greater than a mean temporal spacing of the multiplicative disturbances,
b) a mean disturbance duration $T_d$ of the statistically distributed time-selective disturbances is larger than a symbol duration $T$, and
c) the pulse-expanding filter has an essentially constant amplitude response and a linear delay of the envelope delay.

9. Method according to one of Claims 1 to 8, characterized in that
a) the symbols smeared over the time range $k_0 T$ are transformed in the transmitter by means of a pulse shaper into a baseband signal,
b) the baseband signal is transmitted to the receiver through the channel by means of a high-frequency carrier wave and
c) is transformed there by means of an inverse pulse shaper into a disturbed received signal for the purpose of downstream fading compensation.

10. Receiver (2) for carrying out the channel estimation of the method in accordance with Claim 1, in which method digital data are transmitted via a time-variant channel (3) affected by additive noise, the digital data to be transmitted occurring in a transmitter (1) in the form of symbols ($\alpha_\mu$) having a symbol duration T, the symbols in the transmitter (1) being smeared - in the sense of smeared data transmission - by means of a pulse-expanding filter (5) having an essentially linear amplitude response and linearly rising or falling envelope delay over a time range $k_0 T$, and the temporally smeared symbols being transmitted in accordance with a linear modulation method in the form of a transmission signal via the time-variant channel (3) to the receiver (2), characterized in that the receiver (2)

a) has a channel estimator (13) for determining the time dependence of the channel (3), and

b) a time-variant transverse filter (10, 11) for filtering the received transmission signal as a function of the channel estimation, which transverse filter (10, 11) is designed such that the mean square error is a minimum at the input of a downstream decoder (12), it being the case that

c) for the purpose of decoding the digital data transmitted via a time-selective channel, that is to say a channel affected by multiplicative disturbances, the time-variant transverse filter (10, 11) is split up into a fading equalizer (10) dependent on the channel estimation and a downstream, time-invariant inverse pulse-expanding filter (11).

11. Receiver according to Claim 10, characterized in that a computing circuit (14) is provided in the fading equalizer (10) for the purpose of compensating the channel disturbances with the aid of amplification factors

$$y_\mu = \frac{x_\mu^*}{x_\mu^* x_\mu + \beta^{(0)} N_0/E_s} \, ,$$

it being the case that

$x_\mu =$ estimated fading coefficient,
$N_0 =$ spectral power density of the noise
$E_s =$ mean symbol energy, and
$\beta^{(0)} =$ correction factor.

**Revendications**

1. Procédé pour la transmission de données numériques par un canal (3) variable en temps et présentant un bruit de fond additif, moyennant quoi dans un émetteur (1) les données numériques à transmettre sous forme de symboles ($\alpha\mu$) apparaissent avec une durée de symboles T, lequel procédé comporte la combinaison suivante d'étapes :

a) les symboles sont maculés dans un émetteur (1) - dans le sens de la Smeared Data Transmission - avec un filtre d'expansion d'impulsions (5) avec une marche d'amplitude sensiblement linéaire et un temps de marche de groupes linéaire montant ou descendant sur une plage de temps $k_0 T$ ;

b) les symboles maculés dans le temps sont transmis selon un procédé de modulation linéaire sous forme d'un signal de transmission par le canal variable en temps à destination d'un récepteur (2) ;

c) dans le récepteur (2) s'effectue une évaluation de canal pour déterminer la dépendance temps du canal (3) ;

d) le signal de transmission reçu est filtré en fonction de l'évaluation de canal dans un filtre transversal variable en temps (10, 11) de telle sorte qu'à l'entrée d'un décodeur en aval (12), l'erreur quadratique moyenne est minimale, moyennant quoi pour le décodage des données numériques transmises par un canal sélectif en temps, c'est-à-dire présentant des perturbations multiplicatives, le filtre transversal variable en temps est divisé en un fading-equalizer (correcteur d'évanouissement) (10) fonction de l'évaluation de canal et en un filtre d'expansion d'impulsions (11) inverse variable en temps, situé en aval.

2. Procédé selon la revendication 1, caractérisé en ce que :

a) dans le fading-equalizer (correcteur d'évanouissement), le signal de transmission est multiplié en vue de la compensation des perturbations de canal par un facteur d'amplification

$$y_\mu = \frac{x_\mu^*}{x_\mu^* x_\mu + \beta^{(0)} N_0/E_s} \, ,$$

dans laquelle

$x_\mu$ = coefficient de fading (évanouissement) évalué
$N_0$ = puissance volumique spectrale du bruit
$E_s$ = énergie de symbole moyenne
$\beta^{(0)}$ = facteur de correction
et

b) après le filtre transversal, les données numériques sont déterminées à l'aide d'un décodeur MAP conçu pour un canal AWGN.

3. Procédé selon l'une des revendications 1 ou 2, caractérisé en ce que la plage de temps $K_0T$ correspond sensiblement au facteur d'expansion $k_0 \geqq 50$.

4. Procédé selon l'une des revendications 1 à 3, caractérisé en ce que dans le récepteur, dans le sens du principe Feed-Forward, la détermination des données numériques s'effectue en plusieurs étapes, dans lesquelles

a) à partir des données déterminées dans une étape précédente et d'un facteur d'amplification amélioré

$$y_\mu^{(i+1)} \;=\; \frac{x_\mu^*}{x_\mu^* x_\mu \;+\; \beta^{(i+1)} N_0/E_s}$$

on obtient un signal ISI,
b) on pondère le signal ISI,
c) le signal ISI pondéré est soustrait du signal de transmission judicieusement retardé et multiplié par le facteur d'amplification amélioré, et
d) le signal de transmission ainsi corrigé est à nouveau régénéré avec le filtre d'expansion d'impulsions inverse et les données numériques sont de nouveau déterminées.

5. Procédé selon la revendication 4, caractérisé en ce que pour la détermination des données, on n'utilise pas plus de trois étapes.

6. Procédé selon l'une des revendications 4 ou 5, caractérisé en ce que la plage de temps $k_0T$ correspond sensiblement à un facteur d'expansion $k_0 \geqq 100$.

7. Procédé selon les revendications 1 à 6, caractérisé en ce que le filtre d'expansion d'impulsions est un filtre transversal avec un ralentissement d'étapes nT qui correspond à un multiple n de la durée de symbole T de sorte que l'on effectue simultanément une imbrication des symboles.

8. Procédé selon les revendications 1 à 7, caractérisé en ce que

a) la plage de temps $k_0T$ est beaucoup plus grande qu'un espace de temps moyen des perturbations multiplicatives,
b) une durée de perturbation moyenne $T_d$ des perturbations sélectives en temps réparties statiquement est supérieure à une durée de symbole T, et
c) le filtre d'expansion d'impulsions présente dans l'essentiel une marche d'amplitude constante et un ralentissement linéaire du temps de propagation de groupes.

9. Procédé selon l'une des revendications 1 à 8, caractérisé en ce que

a) les symboles maculés sur la plage de temps $k_0T$ sont transformés dans l'émetteur au moyen d'un circuit de mise en forme d'impulsion dans un signal de bande de base,
b) le signal de bande de base est transmis au moyen d'une onde porteuse haute fréquence par le canal vers le récepteur, et
c) pour y être transformé au moyen d'un circuit de mise en forme d'impulsion inverse en un signal de réception perturbé en vue de la compensation de fading (évanouissement) consécutive.

10. Récepteur (2) pour la conduite de l'évaluation de canal du procédé selon la revendication 1, procédé dans lequel les données numériques sont transmises par un canal variable en temps et présentant un bruit de fond additif (13), moyennant quoi dans un émetteur (1) les données numériques à transmettre sous forme de symboles ($\alpha\mu$) apparaissent avec une durée de symboles T, moyennant quoi les symboles dans l'émetteur (1) - dans le sens de la Smeared Data Transmission - sont maculés avec un filtre d'expansion d'impulsions (5) et avec une allure d'amplitude sensiblement linéaire et un temps de propagation de groupes linéairement montant ou descendant sur une plage de temps $k_0T$ et moyennant quoi les symboles maculés sont transmis selon un procédé de modulation linéaire sous forme d'un signal de transmission par le canal variable en temps (3) vers le récepteur (2), caractérisé en ce que le récepteur (2)

a) présente un évaluateur de canal (13) pour déterminer la dépendance temps du canal (3) ; et

b) un filtre transversal variable en temps (10, 11) pour filtrer le signal de transmission reçu en fonction de l'évaluation de canal, lequel filtre transversal (10, 11) est conçu de telle sorte qu'à l'entrée d'un décodeur (12) en aval, l'erreur quadratique moyenne est minimale, de sorte que

c) pour décoder les données numériques transmises par un canal sélectif en temps, c'est-à-dire comportant des perturbations multiplicatives, le filtre transversal variable en temps (10, 11) est divisé en un fading-equalizer (correcteur d'évanouissement) (10) dépendant de l'évaluation de canal et en un filtre d'expansion d'impulsions inverse variable en temps (11) situé en aval.

11. Récepteur selon la revendication 10, caractérisé en ce que dans le fading-equalizer (correcteur d'évanouissement) (10), il est prévu un circuit de calcul (14) en vue de la compensation des perturbations de canal à l'aide des facteurs d'amplification

$$y_\mu = \frac{x_\mu{}^*}{x_\mu{}^* x_\mu + \beta^{(0)} N_0/E_s} ,$$

dans lesquels

$x_\mu =$ coefficient de fading (évanouissement) évalué

$N_0 =$ puissance volumique spectrale du bruit de fond

$E_s =$ énergie de symbole moyenne

$\beta^{(0)} =$ facteur de correction.

FIG.1

FIG.5

E(t)

FIG.2

FIG.4

FIG.3

FIG.6

FIG.7

19